# DEMANDE DE BREVET EUROPEEN

(11) **EP 1 905 904 A1**
(43) Date de publication de la demande: **02.04.2008**
(21) Numéro de dépôt: 07370016.3
(22) Date de dépôt: 25.09.2007
(51) Int. Cl.: E03B 3/02, B01D 36/00

(54) **Système de récupération d'eau de pluie**

(30) Priorité: 28.09.2006 FR 0608526
(71) Demandeur: Eaux de France, 59200 Tourcoing (FR)
(72) Inventeur: Mathon, Thierry, 59200 Tourcoing (FR)
(74) Mandataire: Duthoit, Michel Georges André

(57) **Abrégé**

L'invention concerne tout d'abord un système de récupération d'eau de pluie, comprenant une cuve de stockage (31) équipée d'un bloc de filtration (1) prévu à l'entrée de la cuve et des moyens de collectage (33) d'eau de pluie connectés au bloc de filtration.

Selon l'invention, le système présente en outre un passage aéraulique de décompression permettant d'évacuer l'air de la cuve pendant son remplissage.

L'invention concerne également un bloc de filtration muni d'un passage aéraulique de décompression (8).

## Description

La présente invention concerne un système de récupération d'eau de pluie comprenant une cuve de stockage dont l'entrée est équipée d'un bloc de filtration.

Dans le domaine de la récupération de l'eau de pluie, cette dernière est collectée par la toiture puis subit une filtration. L'eau peut être stockée dans une cuve enterrée, notamment de haute qualité en béton vibré.

L'eau séjourne dans la cuve à une température constante, été comme hiver, entre 14 et 15°C, à l'abri de la lumière évitant le développement des micro-organismes. L'eau de pluie, naturellement acide retrouve un pH neutre grâce au contact du béton de la cuve, et reste douce. Une station de pompage permet alors de prélever de l'eau filtrée par une crépine au fond de la cuve pour la redistribuer.

Actuellement, on équipe l'entrée de la cuve, encore appelée trou d'homme, d'un bloc de filtration. Ce bloc se compose d'un bac refermé par un couvercle et accueille un filtre. Ce bac présente, en amont du filtre, un orifice d'entrée d'eau, alimenté par les gouttières, et un orifice de trop-plein, connecté au tout-à-l'égout. Le ou les filtres sont logés dans un seau filtrant emboîté dans le volume interne du bac.

Toutefois, lorsque la cuve de stockage des eaux de pluie se remplit rapidement, par exemple suite à de fortes précipitations, l'air contenu dans la cuve se comprime et exerce une forte pression sur le seau filtrant qui est alors projeté vers le haut avec le couvercle.

On connaît du document DE 43 29 438 un système de récupération d'eau de pluie comprenant une cuve, un trou d'homme et un bloc de filtration. Une conduite traverse la paroi du trou d'homme pour acheminer l'eau vers le bloc de filtration. Un conduit d'évent joint l'intérieur de la cuve et le volume interne du trou d'homme.

Le but de la présente invention est de proposer un système de récupération d'eau de pluie, comprenant une cuve de stockage, équipé d'un bloc de filtration, prévu à l'entrée de la cuve, qui pallie les inconvénients précités, permettant la récupération et la filtration des eaux de pluie quelle que soit l'intensité des précipitations.

Un autre but de l'invention est de proposer un bloc de filtration amélioré, répondant à ce même problème.

D'autres buts et avantages de la présente invention apparaîtront au cours de la description qui va suivre qui n'est donnée qu'à titre indicatif et qui n'a pas pour but de la limiter.

L'invention concerne tout d'abord un système de récupération d'eau de pluie, comprenant une cuve de stockage, équipée d'un bloc de filtration prévu à l'entrée de la cuve, et des moyens de collectage des eaux de pluie, connectées au bloc de filtration, le système présentant, en outre, un passage aéraulique de décompression permettant d'évacuer l'air de la cuve pendant son remplissage.

Selon l'invention, le passage aéraulique est intégré au bloc de filtration.

L'invention concerne également un bloc de filtration, prévu pour être logé et fixé au niveau de l'entrée d'une cuve de stockage d'un système de récupération d'eau de pluie, comprenant un bac, fermé par un couvercle et un élément filtrant, ledit bac présentant, d'une part, une partie supérieure, pourvue d'un orifice d'entrée d'eau et d'un orifice de trop-plein et, d'autre part d'une partie inférieure, dont le volume interne permet d'accueillir l'élément filtrant et pourvu d'un orifice d'évacuation d'eau filtrée, caractérisé en ce que ledit bloc présente, en outre, un passage aéraulique de décompression joignant le volume interne desdites parties inférieure et supérieure dudit bac, en amont et en aval de l'élément filtrant, ledit passage débouchant en amont de l'élément filtrant à un niveau supérieur du niveau de l'orifice de trop-plein.

L'invention sera mieux comprise à la lecture de la description suivante, accompagnée des dessins en annexe qui en font partie intégrante et parmi lesquels :
- la figure 1 illustre schématiquement un système de récupération d'eau de pluie conforme à l'invention, comprenant une cuve de stockage équipée d'un bloc de filtration prévu à l'entrée de la cuve,
- la figure 2 illustre en vue de coupe un bloc de filtration conforme à l'invention,
- la figure 3 est une vue éclatée en perspective d'un bloc de filtration conforme à l'invention selon un mode de réalisation,

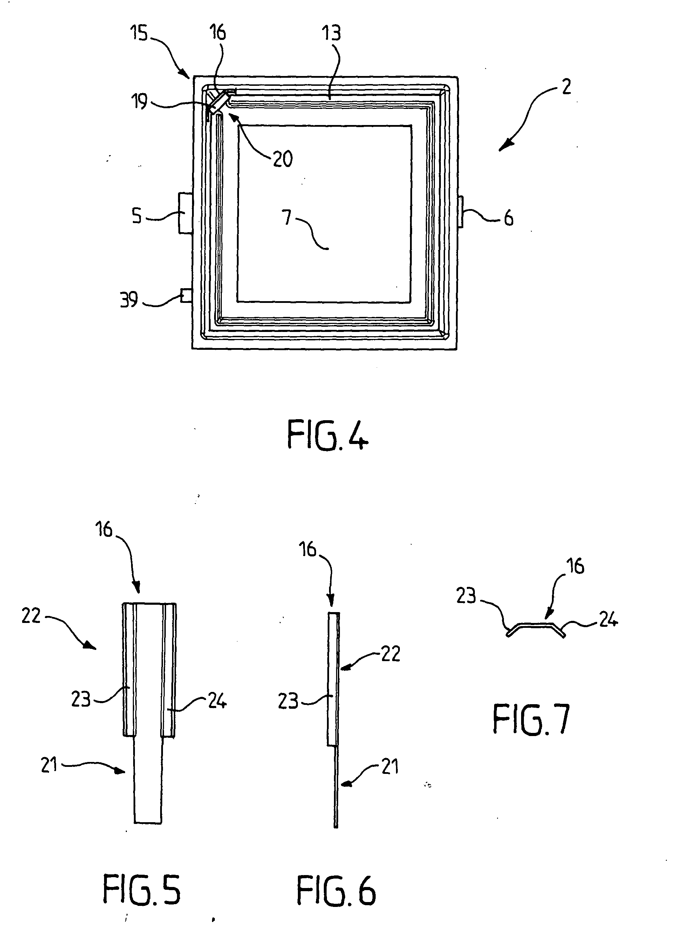

- la figure 4 illustre en vue de dessus le bac du bloc de filtration illustré à la figure 3,
- les figures 5, 6 et 7 sont respectivement des vues de face, de côté et de dessus d'un élément de cloisonnement formant avec l'une des zones d'angle du bac illustré à la figure 4 le passage aéraulique de décompression,
- la figure 8 est une vue schématique selon une coupe verticale d'un bloc de filtration conforme à l'invention selon un second mode de réalisation.

L'invention concerne tout d'abord un système de récupération d'eau de pluie, comprenant une cuve de stockage 31, équipée d'un bloc de filtration 1, prévu à l'entrée de la cuve, et des moyens de collectage 33 d'eau de pluie connectés au bloc de filtration.

Selon l'invention, le système présente, en outre, un passage aéraulique de décompression 8 permettant d'évacuer l'air de la cuve pendant son remplissage. Le passage aéraulique de décompression est intégré au bloc de filtration 1.

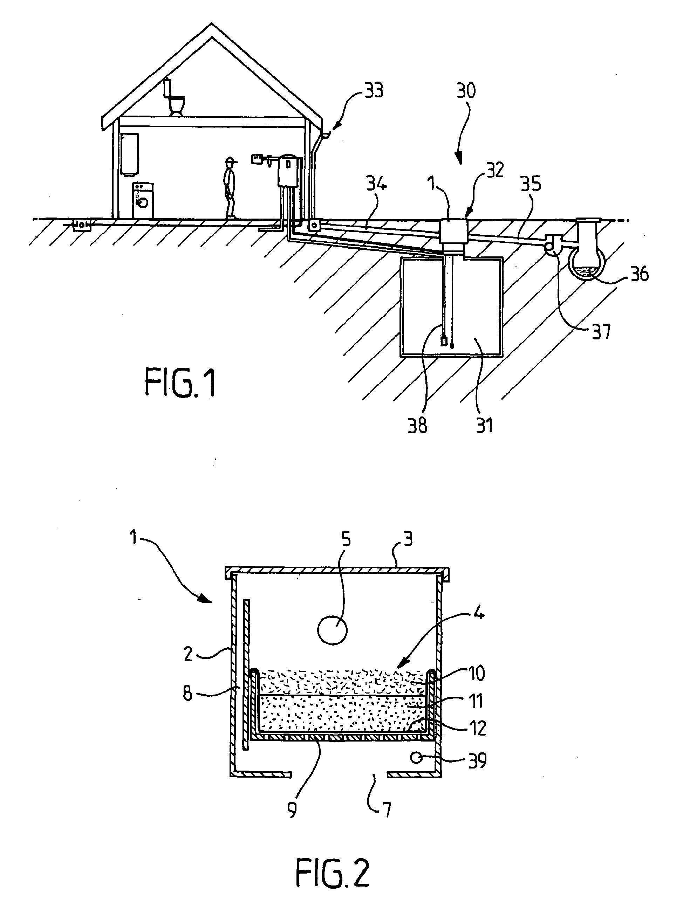

Par exemple, et tels qu'illustrés à la figure 1, les moyens de collectage 33 peuvent être constitués par les gouttières de toit. La cuve de stockage 31 peut être réalisée en béton vibré de haute qualité et armé, ou encore constitué en matière plastique en polyéthylène.

Le système de récupération peut présenter en outre une conduite de trop-plein 35 joignant ledit bloc de filtration 1 au tout-à-l'égout 36. Telle qu'illustrée, la conduite de trop-plein 35 peut être équipée d'un clapet anti-retour à boule 37. Ce clapet peut notamment laisser passer un flux d'air sortant lors du remplissage de la cuve.

L'eau pompée dans la cuve peut être acheminée par un tuyau de pompage 38 muni d'une crépine.

L'invention concerne également un bloc de filtration 1 prévu pour être logé et fixé au niveau de l'entrée d'une cuve 31 d'un système de récupération d'eau de pluie, tel que précédemment exposé.

Le bloc de filtration comprend un bac 2, fermé par un couvercle 3 et un élément filtrant 4. Le bac 2 présente une partie supérieure, pourvue d'un orifice d'entrée d'eau 5 et d'un orifice de trop-plein 6. L'orifice d'entrée d'eau 5 est notamment connecté au moyen de collectage 33, l'orifice de trop-plein 6 étant connecté au tout-à-l'égout, notamment par l'intermédiaire du clapet anti-retour à boule 37.

Le bac 2 présente également une partie inférieure, dont le volume interne permet d'accueillir l'élément filtrant 4. La partie inférieure est pourvue d'un orifice 7 d'évacuation d'eau filtrée.

Selon l'invention, le bloc 1 présente en outre un passage aéraulique de décompression 8 joignant le volume interne desdites parties inférieure et supérieure dudit bac 2, en amont et en aval de l'élément filtrant. Le passage aéraulique 8 débouche en amont de l'élément filtrant à un niveau supérieur du niveau de l'orifice de trop-plein 6.

Un orifice 39 peut être également prévu sur la partie inférieure du bac é pour le passage du tuyau de pompage 38 qui ressort dans la cuve par l'orifice 7.

L'élément filtrant 4 peut comprendre un seau de filtration 9 dont le fond est ajouré, conçu pour accueillir au moins une matière filtrante 10, 11, 12. Le seau 4 est dimensionné pour être emboîté dans la partie inférieure dudit bac 2. Le seau de filtration peut accueillir notamment trois matières filtrantes situées dans le seau, et par exemple :
- une filtration à 80 microns grâce à une mousse technique 10,
- une deuxième filtration à 25 microns à travers une couche de silice marbré 11,
- une troisième filtration à 5 microns réalisée par un film technique 12 entourant les parois intérieures du seau de filtration 9.

Avantageusement, les parties inférieure et supérieure dudit bac 2 peuvent être délimitées par un épaulement interne 13. Ledit seau de filtration présente alors un rebord supérieur 14 prévu pour engager en appui avec ledit épaulement 13.

Le seau de filtration peut alors reposer sur l'épaulement interne et peut être muni de deux poignées qui permettent de le retirer et de nettoyer les matières filtrantes, notamment à l'aide d'un nettoyeur à haute pression.

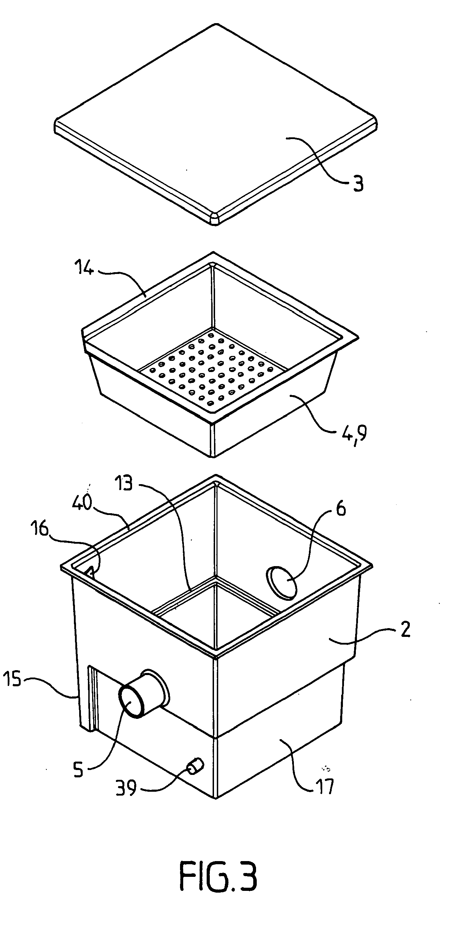

Tel qu'illustré à la figure 3, le bac est globalement de forme carré. Le passage aéraulique 8 est constitué par l'une des zones d'angle dudit bac, associé avec un élément de cloisonnement 16.

Selon l'exemple illustré à la figure 3, l'épaulement interne 13 peut être constitué par un renfoncement 17 de la partie inférieure dudit bac 2.

Le renfoncement 17 peut être situé sur toute la périphérie du bac 2 à l'exception de la zone d'angle 15. Le renfoncement 17 forme avec la zone d'angle 15 une gorge verticale 19 dont la dimension de plus grande largeur est supérieure à celle de l'ouverture de la gorge 20.

L'élément de cloisonnement 16 peut alors se présenter sous la forme d'une lame dont la partie basse 21 est dimensionnée pour être encastrée dans la gorge verticale 19.

Plus particulièrement, la partie basse de la lame est ajustée, de largeur sensiblement égale à la dimension de plus grande largeur de la gorge verticale 19 et s'encastre partiellement sur la hauteur de ladite gorge de telle façon à laisser une ouverture inférieure, en amont de l'élément filtrant 4.

La partie haute 22 de ladite lame peut présenter deux ailes latérales inclinées 23, 24, prévues pour venir en appui sur la partie supérieure du bac 2 contre les deux parois consécutives de la zone d'angle 15.

Les différents éléments constituant le bloc de filtration peuvent être ainsi assemblés aisément, sans vis ou autre élément similaire rapporté.

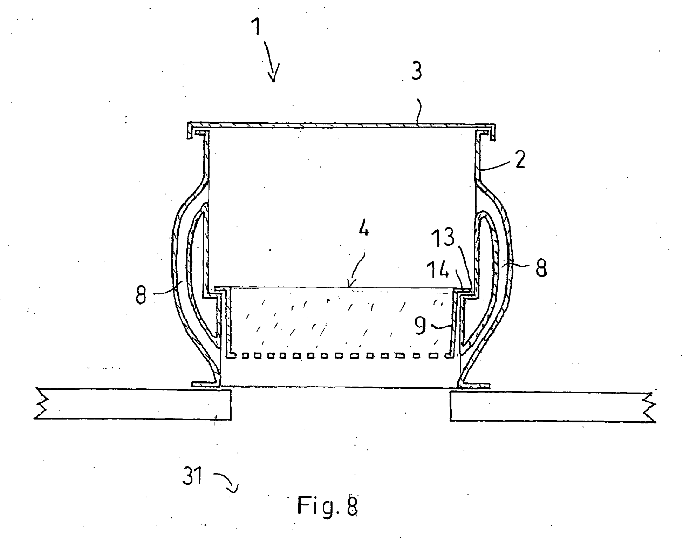

Selon un autre mode de réalisation, le bac 2 et le conduit du passage aéraulique de décompression 8 forment un corps monobloc, notamment obtenu par les techniques de moulage par injection. Par exemple à la figure 8, le bac 2 présente deux passages aérauliques de décompression 8 en saillie extérieur par rapport aux parois latérales dudit bac 2. Les conduits du passage 8 forment avec le bac 2 un corps monobloc, en matière plastique, obtenu par moulage par injection.

L'invention concerne également un procédé de fabrication d'un bloc de filtration conforme à l'invention dans lequel le ou les éléments du bloc 1 sont fabriqués à partir de matière plastique par les techniques de thermoformage et/ou de moulage par injection.

L'invention consiste donc à libérer l'air comprimé dans la cuve qui ne peut s'échapper par la pression de l'eau dans les filtres. L'air ainsi libéré s'évacuera notamment par l'orifice de trop-plein. Le cas échéant, le clapet anti-retour situé en bout de la conduite de trop-plein ne peut obstruer l'évacuation de l'air, s'agissant d'un clapet à boule. Si le clapet s'obstrue, l'évacuation de l'air s'effectue par le couvercle, entre le bord supérieur 40 du bac 2 et ledit couvercle 3.

Naturellement, d'autres modes de mise en oeuvre, à la portée de l'homme de l'art, auraient pu être envisagés sans pour autant sortir du cadre de l'invention définie par les revendications ci-après.

## Revendications

1. Système de récupération d'eau de pluie, comprenant une cuve de stockage (31), équipée d'un bloc de filtration (1) prévu à l'entrée de la cuve, et des moyens de collectage (33) d'eau de pluie, connectés au bloc de filtration (1), ainsi qu'une conduite de trop-plein (35) joignant ledit bloc de filtration (1) au tout-à-l'égout (36), le système présentant un passage aéraulique de décompression (8) permettant d'évacuer l'air de la cuve pendant son remplissage, **caractérisé en ce que** ledit passage aéraulique de décompression est intégré au bloc de filtration.

2. Système de récupération d'eau de pluie selon la revendication 2, dans lequel la conduite de trop-plein (35) est équipée d'un clapet anti-retour à boule (37).

3. Bloc de filtration (1), prévu pour être logé et fixé au niveau de l'entrée d'une cuve de stockage (31) d'un système de récupération d'eau de pluie, notamment selon la revendication 1 ou 2, comprenant un bac (2), fermé par un couvercle (3), et un élément filtrant (4), ledit bac (2) présentant, d'une part, une partie supérieure, pourvue d'un orifice d'entrée d'eau (5) et d'un orifice de trop-plein (6) et, d'autre part, d'une partie inférieure, dont le volume interne permet d'accueillir l'élément filtrant (4) et pourvue d'un orifice (7) d'évacuation d'eau filtrée, **caractérisé en ce que** ledit bloc présente, en outre, un passage aéraulique de décompression (8) joignant le volume interne desdites parties inférieure et supérieure dudit bac (2), en amont et en aval de l'élément filtrant (4), ledit passage débouchant en amont de l'élément filtrant à un niveau supérieur du niveau de l'orifice de trop-plein (6).

4. Bloc de filtration selon la revendication 3, dans lequel l'élément filtrant (4) comprend un seau de filtration (9) dont le fond est ajouré, conçu pour accueillir au moins une matière filtrante (10,11,12), ledit seau (4) étant dimensionné pour être emboîté dans la partie inférieure dudit bac (2).

5. Bloc de filtration selon la revendication 4, dans lequel les parties inférieure et supérieure dudit bac (2) sont délimitées par un épaulement interne (13), ledit seau de filtration présentant un rebord supérieur (14), prévu pour reposer en appui contre ledit épaulement (13).

6. Bloc de filtration selon l'une des revendications 3 à 5, dans lequel le bac (2) est globalement carré, ledit passage aéraulique (8) étant constitué par l'une (15) des zones d'angle internes dudit bac, associée avec un élément de cloisonnement (16).

7. Bloc de filtration selon la revendication 6, comprenant l'épaulement interne (13) dans lequel ledit épaulement interne est constitué par un renfoncement (17) de la partie inférieure du bac (2), ledit renfoncement (17) étant situé sur toute la périphérie du bac à l'exception de ladite zone d'angle (15) où il forme avec cette dernière une gorge verticale (19) dont la dimension de plus grande largeur est supérieure à celle de l'ouverture de gorge (20).

8. Bloc de filtration selon la revendication 7, dans lequel l'élément de cloisonnement (16) se présente sous la forme d'une lame dont la partie basse (21) est dimensionnée pour être encastrée dans ladite gorge verticale (19), la partie haute (22) de ladite lame présentant deux ailes latérales inclinées (23, 24), prévues pour venir en appui sur la partie supérieure du bac (2) contre les deux parois consécutives de ladite zone d'angle (15).

9. Bloc de filtration selon l'une des revendications 3 à 6, dans lequel le bac (2) et le conduit du passage aéraulique de décompression (8) forment un corps monobloc, obtenu par les techniques de moulage par injection.

10. Procédé de fabrication d'un bloc de filtration selon l'une des revendications 3 à 9, dans lequel les éléments du bloc (1) sont fabriqués à partir de matière plastique par les techniques de thermoformage et/ou de moulage par injection.
